(19) Europäisches Patentamt

European Patent Office

Office européen des brevets

(11) **EP 2 158 736 B1**

(12) **EUROPEAN PATENT SPECIFICATION**

(45) Date of publication and mention
of the grant of the patent:
**08.02.2012 Bulletin 2012/06**

(51) Int Cl.:
***H04L 25/02*** *(2006.01)*  ***H04L 27/26*** *(2006.01)*
***H04L 1/06*** *(2006.01)*

(21) Application number: **08750681.2**

(22) Date of filing: **22.05.2008**

(86) International application number:
**PCT/GB2008/001758**

(87) International publication number:
**WO 2008/142419 (27.11.2008 Gazette 2008/48)**

(54) **OFDM-MIMO radio frequency transmission system**

OFDM-MIMO-Hochfrequenzübertragungssystem

Système de transmission radiofréquence OFDM-MIMO

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**RS**

(30) Priority: **23.05.2007 GB 0709899**

(43) Date of publication of application:
**03.03.2010 Bulletin 2010/09**

(73) Proprietor: **British Broadcasting Corporation
London W1A 1AA (GB)**

(72) Inventors:
• **HAFFENDEN, Oliver, Paul
London SW17 0TN (GB)**

• **NOKES, Christopher, Ryan
Betchworth RH3 7EH (GB)**
• **STOTT, Jonathan, Highton
Horley
Surrey RH6 9AR (GB)**

(74) Representative: **Loveless, Ian Mark
Reddie & Grose
16 Theobalds Road
London WC1X 8PL (GB)**

(56) References cited:
**EP-A- 1 170 897      EP-A- 1 821 481
WO-A-2007/052576      US-A1- 2003 072 254**

**Description**

BACKGROUND OF THE INVENTION

This invention relates to an OFDM-MIMO radio frequency transmission method and to a transmitter and receiver for use in such a method.

Reference should be made to the following documents by way of background:

[1] ETSI Standard ETS 300 744, Digital Broadcasting Systems for Television, Sound and Data Services; framing structure, channel coding and modulation for digital terrestrial television, 1997, the DVB-T Standard.
[2] United States Patent 5,345,599 Paulraj et al., 1994.
[3] G. Fischini and M. Gans, "On Limits of Wireless Communication in a Fading Environment when using Multiple Antennas", Wireless Personal Communications, Vol. 6, No. 3, March 1998, pages 311-335.
[4] European Patent Application 1221793A which describes the basic structure of a DVB-T receiver.
[5] SDM-COFDM Technologies for Broadband Wireless Access over 100 MBIT/s, Sugiyama et al, NTT Technical Review, Vol. 2, No. 1, January 2004.
[6] Pilot-to-Data Power Ratio for Maximizing the Capacity of MIMO-OFDM, Kim et al, IEEE Trans. on Communications, 22 November 2004. See also references [1] to [7] of this paper which describe various OFDM-MIMO proposals, and references [8] to [20] which are concerned with aspects of pilots in OFDM and/or MIMO systems.
[7] R. Monnier, J.B. Rault, and T. de Couasnon, "Digital television broadcasting with high spectral efficiency" IBC Amsterdam, The Netherlands, pp. 380-384, 1992, which describes a digital transmission system employing dual-polarisation transmissions.
[8] Schulze and Lüders "Theory and Applications of OFDM and CDMA", pub. John Wiley & Sons, 2005, ISBN 0470850698, see especially pages 181 to 183.
[9] International Patent Application WO01/76110 Qualcomm Inc/Wallace et al. describes obtaining CSI information in an OFDM-based MIMO system by using pilot symbols. The receiver units determine the CSI for certain disjoint sub-channels that carry pilot symbols, and report these back to the transmitter, which produces estimates for the disjoint sub-channels that do not carry pilot symbols.
[10] The document WO 2007/052576 A describes channel estimation using pilot channels, with pilot phase inversion.
[11] US Patent Application US 200310072254 describes a method and apparatus for reducing the number of pilot symbols within OFDM communications.

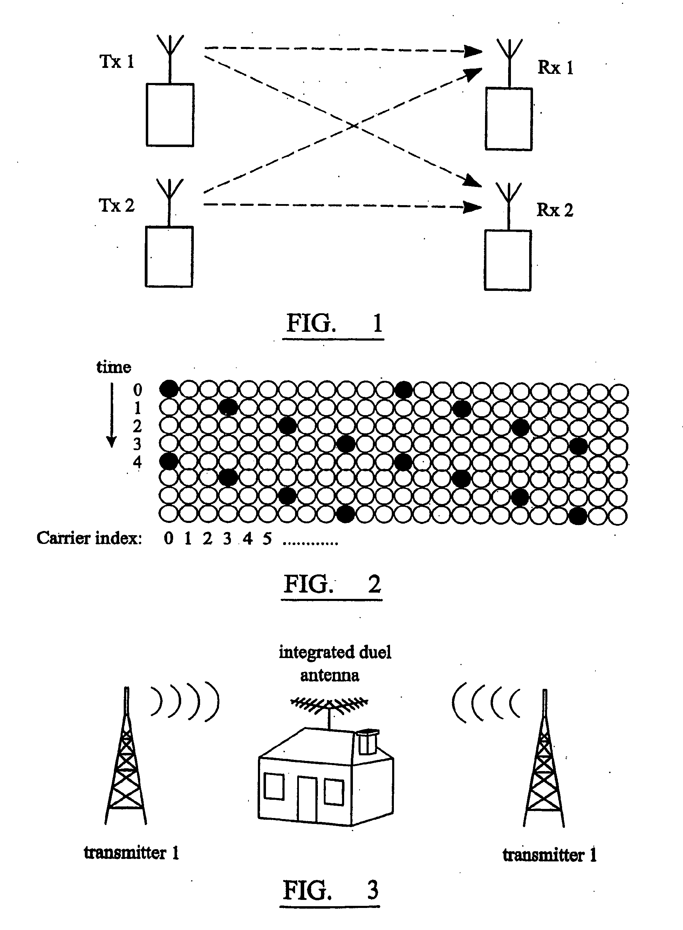

Methods of delivering terrestrial digital wireless television have been proposed which use Multiple Input, Multiple Output (MIMO) techniques to allow dual-directional or dual-polarisation transmissions to be employed. In a typical basic system there are two transmit antennas and two receive antennas, with associated transmitters and receivers, as illustrated in Fig. 1 of the accompanying drawings. Such a system can deliver up to twice the throughput of conventional DVB-T (Digital Video Broadcasting - Terrestrial), whilst requiring no additional spectrum. More generally MIMO refers to a radio link employing at least two (two or more) transmitters and two receivers. The basic assumption is that in a suitable environment the RF (radio frequency) paths from each transmitter to each receiver are sufficiently dissimilar to act, at least partially, as two distinct channels.

Our earlier United Kingdom Patent Application 0603356.7 and European Patent Application 07250430.1, both published after the priority date of the present application and referred to below as 'our earlier applications', describe an OFDM-MIMO system in the form of a DVB-T system which is modified in that the phases of selected ones of the pilot signal transmissions, particularly the scattered pilots, are chosen or changed at the transmitters such that some of the corresponding pilot signal transmissions from the two (or more) MIMO transmitter stages are in the same phase and others of the transmissions are with relatively-inverted phase. At a receiver the pilot signals are extracted and combined by addition and subtraction of the inverted and non-inverted pilots, so as to obtain an indication of the transmission channel characteristics. Such modifications to the standard DVB-T transmission signal allow the receiver to have knowledge of the resulting 2-by-2 matrix channel.

SUMMARY OF THE INVENTION

The present invention provides an OFDM-MIMO radio frequency transmission method and a transmitter and receiver for use in the method. The invention relates to various improvements in the system of our earlier applications.

The improvements of the present invention are defined in the independent claims below, to which reference may now be made. Advantageous features are set forth in the appendant claims. In particular it should be noted that the various improvements can be employed separately, or together in different combinations.

BRIEF DESCRIPTION OF THE DRAWINGS

The invention will be described in more detail by way of example with reference to the accompanying drawings, in which:

Fig. 1 is a schematic diagram of a MIMO system with two transmitters and two receivers;
Fig. 2 is a timing diagram illustrating pilots in an OFDM signal as used in accordance with the DVB-T standard (reference [1] above);
Fig. 3 illustrates a 2-by-2 OFDM-MIMO system used for DVB-T employing dual directional Yagi antennas;
Fig. 4 is a block diagram of a transmitter in the system;
Fig. 5 is a block diagram of a receiver in the system;
Fig. 6 is a block diagram of a part of the receiver circuit for processing received pilots;
Fig. 7 is a timing diagram similar to Fig. 2 showing a modification in accordance with a first improvement of this invention;
Fig. 8 shows timing diagrams similar to Fig. 2 showing a modification in accordance with a second improvement of this invention; and
Fig. 9 is a block diagram of an alternative form in accordance with a third improvement of this invention for the part of the receiver circuit shown in Fig. 6 for processing received pilots.

DETAILED DESCRIPTION OF A PREFERRED EMBODIMENT OF THE INVENTION

*The invention of our earlier applications*

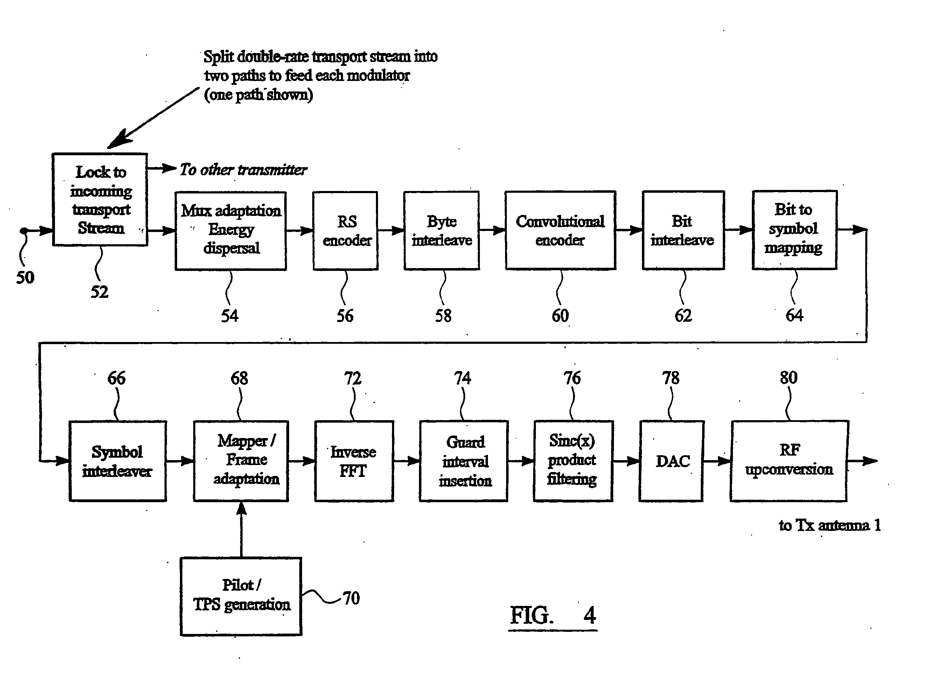

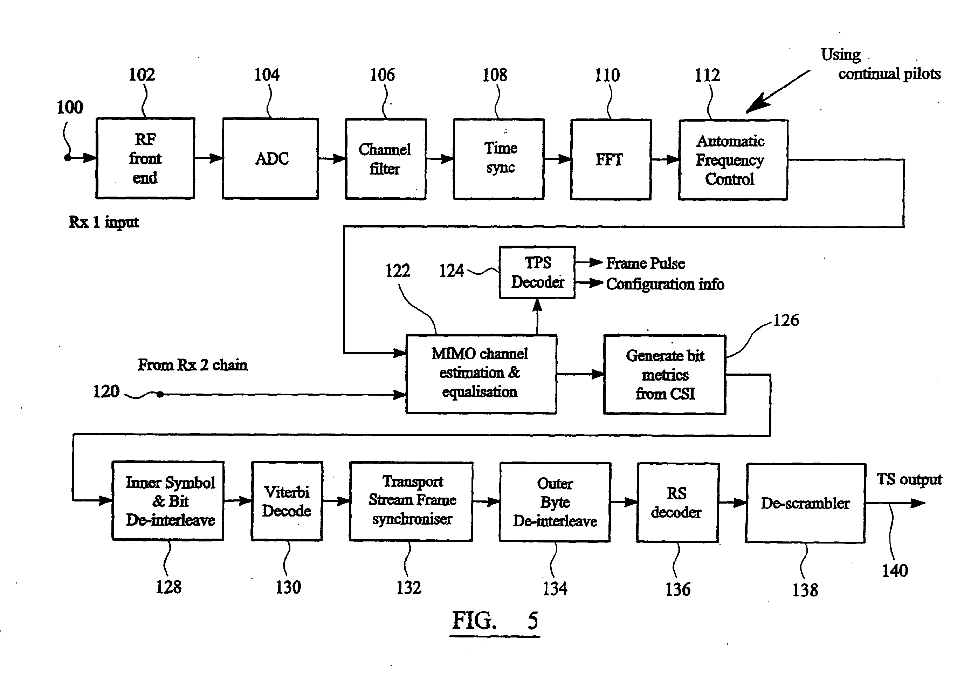

Our earlier applications referred to above disclosed OFDM-MIMO systems as will first be described in detail.
Digital terrestrial television (DTT) using the DVB-T standard is now operational and is well-known to those skilled in the art. It uses COFDM (coded orthogonal frequency division multiplex or coded OFDM) which is a many-carrier system which uses a large number of orthogonal and closely-spaced carriers within a single frequency band. The data to be transmitted is distributed over the many carriers, thereby greatly reducing the data rate on each carrier. The data is transmitted in a succession of symbol periods, each symbol period conveying one QAM (quadrature amplitude modulated) symbol on each of the many data-carrying carriers.
To assist in frequency synchronization and in channel estimation, the signal includes two types of pilot signals, these being selected ones of the many carriers, that do not carry data. The pilots or training signals are arranged in frequency and time in a defined structure. As defined in the DVB-T standard (reference [1] above), continual pilots are provided in addition to scattered pilots. The modulation applied to both continual and scattered pilots may typically be +4/3 or -4/3, in accordance with a pseudo-random sequence in the carrier index. Such carriers are well-described in many publications including textbooks such as reference [8] above, which gives two possible grids for such pilots. One of these grids, namely a diagonal grid, is also shown as Fig. 2 of the accompanying drawings. The pilots are indicated by the black circles, the data carriers by open circles.
A two-by-two MIMO system is illustrated in Fig. 1. In this system there are two transmitters Tx1 and Tx2 transmitting to two receivers Rx1 and Rx2. The transmission paths are chosen in accordance with diversity or space multiplex techniques such that the receiver Rx1 receives a primary (wanted) signal from transmitter Tx1 and only a secondary (interfering) signal from transmitter Tx2, and conversely receiver Rx2 receives a primary signal from transmitter Tx2 and only a secondary signal from transmitter Tx1. This may be achieved, for example, in a number of possible ways, by having spaced-apart antennas in different geographical locations, as illustrated in Fig. 3. An alternative is to use directional orthogonal dual-polarisation transmissions from the same transmitter location (a single mast) with a directional dual-polarised antenna with different antenna polarisations at the receiver site. Channel capacity is maximised when there is minimal cross-coupling between the transmitted signals. With the dual-polarisation version, if the channel is to approach the unit matrix to maximise the capacity, the polarization discrimination needs to be as high as possible. Otherwise the channel may exhibit poor capacity. Although referred to above as primary and secondary signals, the system can tolerate the levels being comparable, provided that the channel matrix is substantially orthogonal. That is, as long as the elements of the receive antenna remain orthogonal, an angular offset with respect to the transmitter elements does not impair capacity, since the channel matrix is simply multiplied by an orthogonal rotation matrix. This leaves the capacity unchanged.
The two transmitters Tx1 and Tx2 each transmit half the required signal. The data is divided between the two channels in any convenient manner. The structure of each transmitter is well-known and is as described in for example references [1] and [4] above and illustrated in Fig. 4. Similarly the receivers each receive half the data, and the receivers are also well-known and may each take the form described in reference [4] above and illustrated in Fig. 5. However the receivers will also receive interfering signals in the form of the secondary signal from the 'other' transmitter. Figs. 4 and 5 are described below.

If the paths between the transmitters and receivers are not time varying, then the composite channel associated with Fig. 1 can be described by a 2-by-2 matrix of complex coefficients thus:

$$\mathbf{H} = \begin{pmatrix} h_{11} & h_{12} \\ h_{21} & h_{22} \end{pmatrix} \dots\dots\dots\dots\dots\dots\dots\dots\dots\dots\dots\dots (1)$$

where each coefficient $h_{ij}$ is of the form (with $i \equiv$ receiver index, $j \equiv$ transmitter index):

$$h_{ij} = A_{ij} \exp j\theta_{ij} \dots\dots\dots\dots\dots\dots\dots\dots\dots\dots\dots (2)$$

The coefficients $h_{ij}$ must be deduced by the receiver, at each carrier position. The channel is assumed to be flat-fading over each individual carrier. This is ensured for DVB-T in practice by the relatively large number of carriers and their close spacing. Once the matrix **H** is known, a number of techniques are available to 'invert' the channel, the simplest being application of the inverse matrix to the received signal-plus-noise. This can be done, for example, using a zero-forcing (ZF) matrix inverse or using a minimum-mean-square error approach (MMSE). These techniques are well-known to those skilled in the art.

In the DTT-MIMO system as described the two-input receiver has knowledge of the 2-by-2 complex channel which characterises the transmission path. This type of information is encapsulated, in a conventional DVB-T system, in a complex vector of channel estimates. This vector is obtained by time and frequency interpolation of the DVB-T pilot structure introduced at the transmitter. Each element of the vector is a complex number ($h^0$ ...... $h^{1704}$) representing the channel at a particular carrier position.

In the 2-by-2 MIMO case, the channel estimate obtained by the $i^{th}$ receiver corresponds to the *sum* of the complex transmission paths $h_{i1}$ and $h_{i2}$ respectively. What the receivers need is a way to estimate $h_{i1}$ and $h_{i2}$ individually. In accordance with the invention of our earlier applications we propose inverting the scattered pilots at one of the two transmitters every other symbol. This causes the receiver to estimate the sum of the complex transmission paths $h_{i1}$ and $h_{i2}$ during, say, even numbered symbols and the difference during the alternate odd-numbered symbols. Now since we already have the sum, with the difference of the complex transmission paths $hi1$ and $h_{i2}$ obtained in this way then the individual terms $h_{i1}$ and $h_{i2}$ can be extracted by simple arithmetic. More generally, the phases of the pilots are changed such that selected ones of the pilots are relatively inverted in a predictable way.

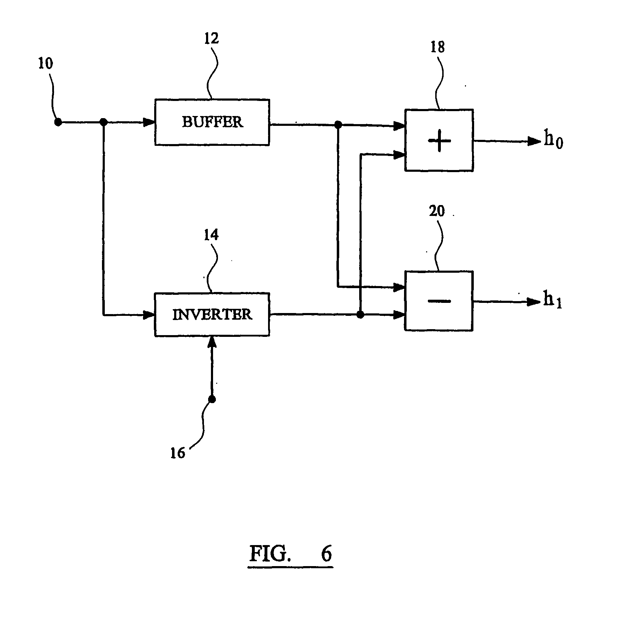

Fig. 6 shows the functionality required to receive this result. Fig. 6 may be implemented in hardware, though will more usually be implemented in software, in which case the figure may be regarded as being in the nature of a flow chart. The figure illustrates the channel estimate obtained from one of the pilots being received at an input 10. This is applied both to a buffer 12 providing a delay of one symbol period, and an inverter 14, which receives at an input 16 a square wave control signal with a period equal to two symbol periods. That is for one symbol period the signal at input 16 is a one and for the other it is a zero. The output of the buffer 12 and inverter 14 are each applied to both of an adder 18 and a subtractor 20. One of these will provide the output $h_{i1}$ and the other the output $h_{i2}$. It will be appreciated that Fig. 6 is a very simplified version in that it does not show the complex nature of the signals and that, in fact, the implementation will be by way of a matrix inversion as described above. The principle of operation may nevertheless be seen from this figure.

The receiver is thus arranged to carry out the necessary sum and difference operations on a pair of consecutive channel estimates in order to find the complex transmission paths $h_{i1}$ and $h_{i2}$. Clearly the receiver must be modified to carry out the necessary sum and difference operations on a pair of consecutive channel estimates in order to find the complex transmission paths $h_{i1}$ and $h_{i2}$. This process, and the subsequent matrix inversion to recover the transmitted data, is analogous to the zero-forcing equaliser found in a conventional DVB-T receiver.

In a practical implementation, once each 'half' of the 2-by-2 receiver has determined its associated channel coefficients $h_{i1}$ and $h_{i2}$, then matrix inversion can take place using a zero-forcing (ZF) inverse or a minimum-mean-square error (MMSE) inverse, as mentioned above. As the name suggests, the latter minimises the total error.

The ZF inverse is given by:

$$(\mathbf{H}^{\mathbf{H}} \mathbf{H})^{-1} \mathbf{H}^{\mathbf{H}}$$

where $\mathbf{H}^{\mathbf{H}}$ represents the Hermitian transpose. The ZF inverse reduces to $\mathbf{H}^{-1}$ for a square full-rank matrix.

The MMSE inverse is given by:

$$(\alpha I + H^H H)^{-1} H^H$$

where $\alpha$ is the power noise-to-signal ratio and **I** the identity matrix.

A distinct channel matrix exists for each carrier position, the nature of which determines the signal-to-noise ratio of each element of the recovered signal vector. Preferably the channel matrix is near-orthogonal to minimise noise peaking. With the matrix structure inherent in both the dual-directional and dual-polarisation versions of the system described this condition is largely satisfied. The transmitted data is thereby recovered.

It is important to take account of the effect of the continual pilot corruption mentioned above in respect of its impact on receiver automatic frequency control (AFC). This is now considered.

A difficulty arises if during some DVB-T symbols the scattered pilots are coincident in their carrier positions with the continual pilots. For instance, carrier index 0 is a continual pilot and so, referring to Fig. 2, it is coincident with a scattered pilot at time 0, 4, 8 etc. If this happens to a symbol which is to have pilot inversion, the inversion takes priority and the continual pilot is effectively corrupted. This necessitates changes to the receiver AFC which are considered below.

In a DVB-T receiver, the AFC works by determining the position of the continual pilots in a demodulated signal vector and then accumulating the phase of the pilots in such a way as to determine the sign and magnitude of any frequency error.

In the context of MIMO using scattered pilot inversion as described, the continual pilots which have been corrupted (by inversion of one or more of the transmitted sources) are determined and removed from the AFC processing. Consider, for instance, the 2K mode of DVB-T which has 45 continual pilots. Let us suppose that symbol 0 in Fig. 2 has no pilot inversion on either transmitter, symbol 1 has pilot inversion on one of the transmitters, and so on. It follows that even-numbered symbols never have corrupted continual pilots, but odd numbered symbols sometimes do.

Of the 45 continual pilots, it turns out 11 are corrupted in symbol 1 and a different 11 in symbol 3. So, if we ignore all 22 potentially corrupted pilots during frequency acquisition and just use the remaining 23, then the system will work as before, albeit with a slightly poorer AFC signal-to-noise ratio. Once full receiver synchronisation is obtained, and the DVB-T superframe position determined, then only 11 pilots need be ignored on each of symbols 1 and 3, full use being made of all continual pilots on symbols 0 and 2. This gives improved bandwidth or signal-to-noise ratio within the AFC lock-loop compared to just using 23 continual pilots all the time.

The last-mentioned point is particularly important in a 4-by-4 system, as described below, where only one symbol in four is fully uncorrupted and only 12 continual pilots can be relied on initially. After superframe acquisition, all but a maximum of 11 are usable as before.

The 2k-mode of DVB-T has been assumed for illustrative purposes (1705 carriers), but the extension to 8k is straightforward, by considering the appropriate list of 177 continual pilots instead of 45, and is indeed preferred. For compatibility with a single frequency network it is preferred that the base DVB-T mode chosen be 8k, with a guard interval consistent with the proposed transmitter density and power. A typical set of parameters and the resultant data rate are shown in table 1 below.

| Parameter | Value |
| --- | --- |
| Modulation | 64 QAM |
| Error Coding Rate | 2/3 |
| Guard Interval ($\mu$s) | 28 (1/32) |
| Mode | 8k |
| Data rate (Mbits/s) | 24.1 x 2 =48.2 |

The transmitter structure will now be described with reference to Fig. 4. The input signal is received at a terminal 50 and in a circuit 52 locked to the incoming transport stream the signal is split into two parts to feed the modulators of each of the two transmitters. Only one of the transmitters is shown in detail. In this transmitter, the signal is applied to an MPEG multiplexer and energy dispersal circuit 54 and thence to an outer Reed Solomon encoder 56. This is the first part of the forward error corrector which also includes a byte interleaving circuit 58, a convolutional encoder 60, and a bit interleaving circuit 62. This signal is then applied to a byte to symbol mapper 64, and thence to a symbol interleaver 66. This forms the output of the forward error corrector which is applied to a mapper and frame adaptation circuit 68. The mapper maps the figure into QAM form. It is at this point that the pilots are added to the signal from a pilot and transmission parameter signalling (TPS) generation circuit 70. The output of the mapper and frame adaptation circuit 68 is applied to the OFDM coder, comprising an inverse FFT circuit 72 and a guard interval insertion circuit 74. After appropriate filtering in a sinc(x) product filter 76, the signal is then applied to a digital-to-analogue converter 78, and finally to an RF upconversion circuit or transmitter front end 80 and finally to the transmit antenna. In accordance with the invention of our earlier applications the pilot generation circuit 70 is adapted as described above to alternate the phase on selected carriers on successive symbols.

The corresponding receiver is illustrated in Fig. 5. The signal from one of the input antennas is received at a terminal 100 and applied to an RF front end 102 where it is down converted. The signal is then applied to an analogue-to-digital converter 104 and thence to a channel filter 106. The output of this is applied to a time synchronising circuit 108, and then to the OFDM decoder in the form of a Fast Fourier Transform circuit 110. The output of the FFT is applied to an automatic frequency control circuit 112. The output of the AFC circuit 112 is applied to a MIMO channel estimation and equalisation circuit 122, which also receives at an input 120 the corresponding input from the other of the two receivers. The channel estimation and equalisation circuit is adapted as described above and provides outputs to a TPS decoder 124 which provides frame pulses and configuration information, and to a circuit 126 which generates the bit metrics from the channel state indication obtained in circuit 122. In conventional fashion this is then applied to the inner symbol and bit de-interfeaver 128, a Viterbi decoder 130, a transport stream frame synchroniser 132, an outer byte de-interleaver 134, a Read Solomon decoder 136, and finally a descrambler 138 in order to provide the transport stream output 140. In accordance with this invention the MIMO channel estimation at equalisation circuit is adapted as described above in order to obtain separate channel estimation for the signals received at the receivers making use of the pilot phase inversion introduced at the transmitters.

The basic 2-by-2 system described can be expanded to include both dual-polarisation and dual-directional reception. The system would then deliver up to four times the raw capacity of DVB-T or, more realistically, three times with enhanced robustness conferred by the application of space-time coding. The penalty is increased system complexity, and slightly higher cost of the receiver antenna.

The method is not limited to two-by-two MIMO system with two transmitters and two receivers by may also be used with other systems such as a 3-by-3 system or a 4-by-4 system. The channel capacity increases with the number of transmit and receive antennas. There may be different numbers of transmitters and receivers. The above 2-by-2 case is generalised by first recognising that the transmitted scattered pilot sequence (ignoring the pseudo-random multiplier) can be represented by a 2-by-2 Hadamard matrix thus:

$$\begin{pmatrix} 1 & 1 \\ 1 & -1 \end{pmatrix}$$

Here the row index can be regarded as the transmitter index and the column index the time index.

In an analogous manner a 4-by-4 system can be defined using a 4-by-4 Hadamard matrix. In this case, each receiver learns about its four specific paths over four symbols. A suitable matrix is:

$$\begin{pmatrix} 1 & 1 & 1 & 1 \\ 1 & -1 & 1 & -1 \\ 1 & 1 & -1 & -1 \\ 1 & -1 & -1 & 1 \end{pmatrix}$$

although this is not unique since, for instance, the columns may be re-arranged.

For 3-by-3 and many higher values of N, where a Hadamard matrix is not available, an alternative non-Hadamard but full rank N matrix can be used, such as (for 3-by-3):

$$\begin{pmatrix} 1 & 1 & 1 \\ 1 & 1 & -1 \\ 1 & -1 & -1 \end{pmatrix}$$

Thus the invention of our earlier applications provides a method of using a MIMO channel in a modified DVB-T system, by the use of selective inversion of the DVB-T scattered pilots, to enhance channel estimation. For 2-by-2 and 4-by-4 systems, the preferred implementation is based on a Hadamard matrix. For 3-by-3, and others, a non-Hadamard but full-rank matrix may be used. Changes to AFC processing in the receiver may be desirable to minimise the impact of corruption of continual pilots. Initial acquisition can proceed using a reduced set of continual pilots, although once superframe acquisition is obtained the number of usable pilots may be substantially restored.

The system may be incorporated in a single-frequency network terrestrial digital television system and, as such, features a high degree of spectrum efficiency. The system may be based on dual-directional transmission or, more simply, dual-polarisation transmission.

*First Improvement*

In the context of MIMO using scattered pilot inversion as described above and in our earlier applications, when a scattered pilot which is to be inverted coincides in position with a continual (or fixed) pilot the continual pilot is corrupted. These pilots are then described as being removed from the processing. This requires special processing at the receiver and of course reduces the effectiveness of the continual pilots. The problem is that the AFC circuit in the receiver will not work if the phases for a given carrier are sometimes inverted.

We have appreciated that the system can be improved if the continual pilots are always transmitted with the same phase in every symbol, including the symbols in which they coincide with scattered pilots. For this reason, if the scattered pilots on a particular carrier are to be inverted, any continual pilots on that carrier should also be inverted, on whatever symbol they occur. The AFC algorithm in the receiver does not then need to be materially changed from that required for non-MIMO or conventional operation, but will work essentially without modification, and better results are obtained.

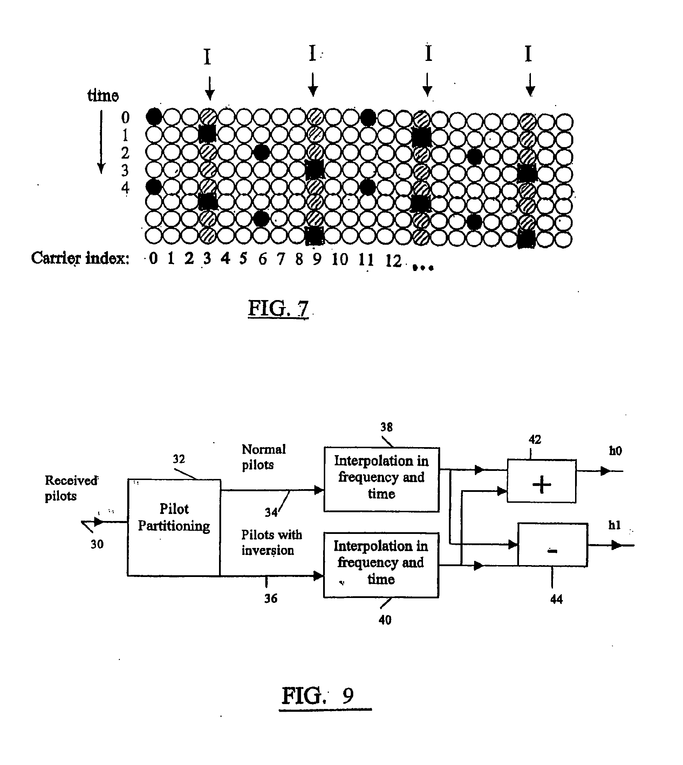

This is now illustrated in Fig. 7, which is a diagram similar to Fig. 2 for this improvement. It is assumed that the carriers on symbols 0, 2, 4 etc. are non-inverted, and that carriers on symbols 1, 3, 5 etc. are inverted. The symbols are of course shown on the time axis. The inverted carriers are shown in Fig. 7 as represented by black squares, whereas the non-inverted carriers are shown, as before, by black circles. This means that the carriers 3 and 9 and so on carry inverted scattered pilots. In accordance with this aspect of the invention, whenever a continual pilot occurs on carriers 3, 9, ..., then these continual carriers are also inverted. That is, any continual carriers which occur at the shaded positions in Fig. 7 are inverted, these relating to inverted carriers as shown by the letter I at the top of the figure.

Implementation of this improvement is achieved as follows. As in the basic system of our earlier applications, one of the two 2-by-2 MIMO transmitters is conventional, while the other is altered. In this altered transmitter, however, the pilot signal generating circuit 70 is now adapted so as to invert the phases of any pilot carriers that occur on the same carrier as scattered pilots that have their phases inverted. This will normally be achieved by a small change to the software installed in the transmitter. Similarly, at the receiver, the improvement is implemented by altering the receiver as shown in Fig. 5. The receiver, in particular the AFC block 112, is adapted so as to compensate for the reversal of the phases of the continual pilots that occur on the same carrier as scattered pilots that have their phases inverted. This will normally be achieved by a small change to the software installed in the receiver. More generally, in an N-by-N MIMO system (N>2), changes are made in at least all but one of the transmitters and in the receiver. The details of the software changes are not given here as they will depend on the particular application, and can be achieved in many different ways, as will be readily apparent to those skilled in this art.

The discussion above with reference to 2-by-2 and other N-rank matrices is equally applicable except that the row index of, say, the Hadamard matrix can be regarded, as before, as the transmitter index but the column index now indicates to which of the two subsets of the pilots (inverted and normal) it relates. If in the N-by-N MIMO configuration each OFDM encoder (i.e. transmitter) has an index i, and the pilot-bearing carriers are divided into N subsets according to an index j calculated from their pilot-bearing-carrier index, modulo N, then scattered pilots are inverted or not according to the element of an N-by-N matrix of full rank whose row number is i and whose column number is j.

*Second Improvement*

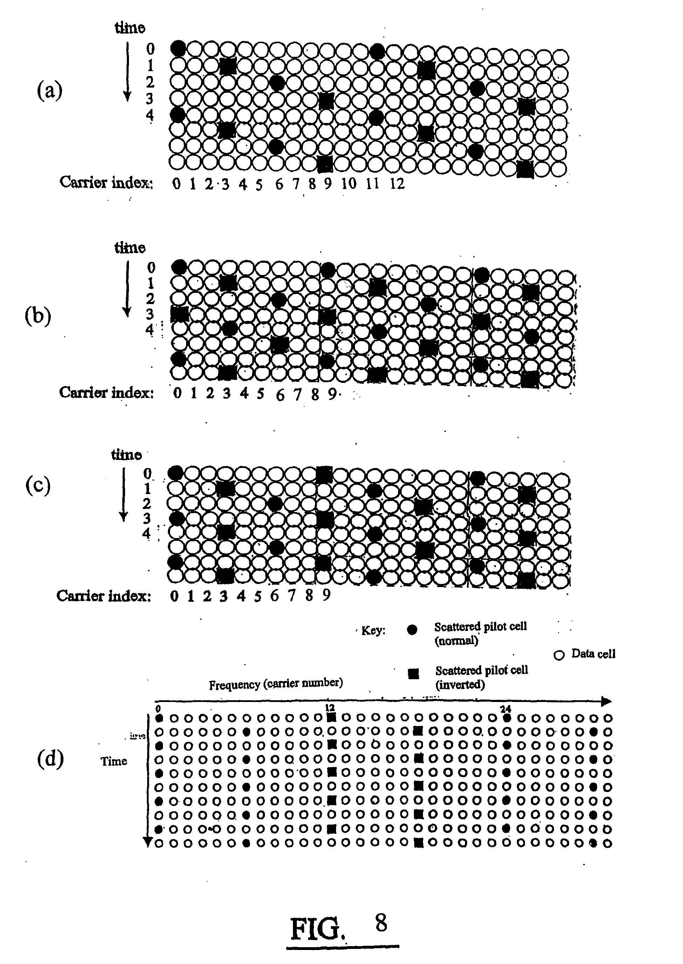

In the example described in our earlier application, and also in relation to Fig. 7, the scattered pilots are inverted on every other symbol, i.e. in time. That is, even numbered symbols are non-inverted and odd-numbered symbols are inverted. This is illustrated in Fig. 8 at (a), where inverted carriers are shown as black squares, and alternate on alternate rows as seen in the figure, whereas the non-inverted carriers are shown, as before, by black circles.

On each symbol, a scattered pilot occurs every 12 carriers, and these carriers are displaced by 3 carriers between one symbol and the next. This is also clearly seen in Fig. 8 at (a). This means that on a given carrier the scattered pilots occur every four symbols. Four is an even number, and therefore inverted scattered pilots, on the one hand, and non-inverted scattered pilots, on the other occur respectively on odd numbered and even numbered carriers.

This can be contrasted with the situation shown at (b) in Fig. 8. Here a scattered pilot is assumed to occur every 9 carriers, while the carriers are still displaced by 3 carriers between one symbol and the next. In this situation on any given carrier some scattered pilots are inverted and others are not. For example, on carrier 3 symbol 1 is inverted but symbol 4 is not inverted.

Thus in the system of our earlier applications, where the pilots occur every four symbols on a given carrier, with the inversion being performed on every other symbol, i.e. in time, the result is obtained that on any given carrier, the scattered pilots will either always be normal, or always be inverted. However, where the repeating pattern is three, as just illustrated, or five, as can also arise in DRM (Digital Radio Mondiale), this is not the case, and any given carrier will have some scattered pilots inverted and some not.

In accordance with this improvement we propose choosing or changing the phases of the pilot signal transmissions, that is the scattered pilots, such that some of the pilot transmissions from the two transmitters are in the same relatively-non-inverted phase and others of the transmissions are with relatively-inverted phase, and where the phases are chosen or changed so that pilot transmissions with relatively-inverted phase are on one set of pilot-bearing carriers and pilot transmissions with relatively-non-inverted phase are on another different set of pilot bearing carriers. Preferably the two sets of pilot bearing carriers are in an alternating formation along the pilot bearing carriers.

This is illustrated in Fig. 8 at (c), which differs from (b) in that all the carriers that are pilot bearing (columns in Fig. 8(c)) carry either inverted or non-inverted carriers. Any given symbol, however, (rows in Fig. 8(c)), now carries some inverted carriers (squares) and some non-inverted carriers (circles). In the more general case this will apply to at least some of the symbols.

Using the terminology above, in the 2-by-2 MIMO case, the channel estimate obtained by the $i^{th}$ receiver corresponds to the *sum* of the complex transmission paths $h_{i1}$ and $h_{i2}$ respectively. What the receivers need is a way to estimate $h_{i1}$ and $h_{i2}$ individually. In accordance with our earlier applications we proposed inverting the scattered pilots at one of the two transmitters every other symbol, i.e. pilot-bearing carrier. This caused the receiver to measure the sum of the complex transmission paths $h_{i1}$ and $h_{i2}$ on one set of pilot cells and the difference on the alternate pilot cells. If the receiver performs a separate interpolation process for each set of pilots, this will yield an estimate of both the sum and the difference of the complex transmission paths $h_{i1}$ and $h_{i2}$ for every carrier on every symbol. The individual terms $h_{i1}$ and $h_{i2}$ can therefore be extracted by simple arithmetic. More generally, the phases of the pilots are changed such that selected ones of the pilots are relatively inverted in a predictable way.

We have now appreciated that if the pilot pattern is diagonal and repeats after an even number of symbols, then inverting the scattered pilots on alternate pilot-bearing carriers is equivalent to inverting them on alternate symbols, as described in our earlier applications. However, if the repeating pattern is an odd number of symbols, then the two are not equivalent. This can give rise to adverse implications for the continual pilots. In the more general case of N-by-N MIMO, the length of the repeating pattern needs to be a multiple of N for the two to be equivalent.

A similar problem to that described above with reference to Fig. 8(b) can also arise with N-by-N MIMO (where N>2) and the solution is the same, viz. invert (or not) scattered pilots in a repeating pattern on successive pilot-bearing carriers in frequency, rather than successive symbols in time.

The improvement of Fig. 8(c) can, as will be appreciated, readily be used in combination with the first improvement of Fig. 7.

Implementation of this improvement is achieved in an essentially similar manner to the first improvement of Fig. 7, namely as follows. As in the basic system of our earlier applications, one of the two 2-by-2 MIMO transmitters is conventional, while the other is altered. In this altered transmitter, however, the pilot signal generating circuit 70 is now adapted so as to invert the phases of scattered pilots that occur on alternate ones of the carriers that carry scattered pilots. This will normally be achieved by a small change to the software installed in the transmitter. Similarly, at the receiver, the improvement is implemented by altering the receiver as shown in Fig. 5. The channel estimation and equalisation circuit 122 is adapted so as to compensate for the reversal of the phases of the scattered pilots that occur on alternate pilot-bearing carriers. This will normally be achieved by a small change to the software installed in the receiver. More generally, in an N-by-N MIMO system (N>2), changes are made in at least all but one of the transmitters and in the receiver circuit. The details of the software changes are not given here as they will depend on the particular application, and can be achieved in many different ways, as will be readily apparent to those skilled in this art.

The discussion described above with reference to 2-by-2 and other N-rank matrices is equally applicable except that the row index of, say, the Hadamard matrix can be regarded, as before, as the transmitter index but the column index now indicates to which of the N subsets of the pilots (i.e. which phase of the repeating pattern) it relates. If in the N-by-N MIMO configuration each OFDM encoder (i.e. transmitter) has an index i, and the pilot-bearing carriers are divided into N subsets according to an index j calculated from their pilot-bearing-carrier index, modulo N, then scattered pilots are inverted or not according to the element of an N-by-N matrix of full rank whose row number is i and whose column number is j.

Finally, Fig. 8 also shows at (d) another arrangement which represents a slight modification of the arrangement of pilots shown at (c). In (d) the first two pilot-bearing carriers are normal (non-inverted), the next two are inverted, and so on in an alternating formation but two at a time rather than one at a time as at (c). This is, for example, of particular value if only frequency interpolation and not time interpolation is to be used (see the third improvement, below) since information about both the sum and the difference of the value of *h* can then be obtained from each symbol on its own. Other patterns of inversion can also be envisaged which may have particular advantages.

*Third Improvement*

Fig. 6 shows one way of obtaining the separate estimates for $h_{i1}$ and $h_{i2}$. Fig. 6 may be implemented in hardware, though will more usually be implemented in software, in which case the figure may be regarded as being in the nature of a flow chart. The figure illustrates the channel estimate obtained using only the pilots on the current symbol being received at an input 10, i.e. the system of our earlier applications. As described above, these are applied both to a buffer 12 providing a delay of one symbol period, and an inverter 14, which receives at an input 16 a square wave control signal with a period equal to two symbol periods. That is for one symbol period the signal at input 16 is a one and for the other it is a zero. The output of the buffer 12 and inverter 14 are each applied to both of an adder 18 and a subtractor 20. One of these will provide the output $h_{i1}$ and the other the output $h_{i2}$.

The preceding paragraph corresponds to an equaliser based only on frequency interpolation within a symbol and with no temporal interpolation except for a "zero order hold" represented by the one-symbol buffer. A more general and improved method is illustrated in Fig. 9. The received pilots received at input 30 are partitioned by a pilot partitioning circuit 32 into one set 34 which were transmitted normally from both transmitters and a second set 36 which were inverted from one transmitter. Each set of pilots is fed to its own time-and-frequency interpolator 38, 40 respectively, the outputs of which are respectively the sum and difference of the two channel responses for every carrier on every symbol. These outputs are each applied to both an adder 42 and a subtractor 44. As before, one of these will provide the output $h_{i1}$ and the other the output $h_{i2}$ here, as in Fig. 6, referred to as $h_0$ and $h_1$.

The receiver is thus arranged to carry out the necessary sum and difference operations on a pair of channel estimates in order to find the complex transmission paths $h_{i1}$ and $h_{i2}$. Clearly the receiver must be modified to perform the interpolations in frequency and time and to carry out the necessary sum and difference operations on a pair of channel estimates in order to find the complex transmission paths $h_{i1}$ and $h_{i2}$. The details of these modifications are not given here as they depend on the particular application, and can be achieved in many different ways, as will be readily apparent to those skilled in the art. The subsequent matrix inversion to recover the transmitted data, is, as with our earlier applications, analogous to the zero-forcing equaliser found in a conventional DVB-T receiver.

The several improvements which have been described can be used independently or in combination. The reader skilled in the art will appreciate that many modifications may be made to the specific examples given, which are purely exemplary.

**Claims**

1. An OFDM-MIMO transmitter, comprising:

   an input for receiving a digital data signal to be transmitted;
   at least two OFDM encoders each for encoding respective data bits of the data signal received at the input together with pilot signals into a many-carrier signal with each carrier conveying a succession of symbols, and with the pilot signal transmissions of all the encoders being located on defined pilot-bearing ones of the carriers, the pilot signals comprising continual pilots and scattered pilots; and
   a corresponding number of radio-frequency transmitter stages coupled to the outputs of the OFDM encoders respectively to transmit the outputs of the OFDM encoders on the same frequency band;
   wherein the phases of the scattered pilot signal transmissions are chosen or changed such that some of the corresponding scattered pilot signal transmissions from the at least two transmitter stages are in the same relatively-non-inverted phase and others of the transmissions are with relatively-inverted phase, the scattered pilot signal transmissions from at least one transmitter stage being inverted for selected pilot-bearing carriers and non-inverted for other pilot-bearing carriers; and
   **characterised in that** continual pilot signal transmissions that occur on a pilot-bearing carrier for which the scattered pilot transmissions are inverted are themselves also inverted.

2. A transmitter according to claim 1, to be used in a 2-by-2 MIMO configuration, in which the scattered pilots from one of the OFDM encoders are inverted on every other scattered-pilot-bearing carrier.

3. A transmitter according to claim 1, to be used, in an N-by-N MIMO configuration, where, if each OFDM encoder has an index i, and the pilot-bearing carriers are divided into N subsets according to an index j calculated from their pilot-bearing-carrier index, modulo N; scattered pilots are inverted or not according to the element of an N-by-N matrix of full rank whose row number is i and whose column number is j.

4. A transmitter according to claim 3, in which the matrix is a Hadamard matrix.

5. A transmitter according to any of claims 1 to 4, in which the transmitter is a DVB-T transmitter.

6. A transmitter according to any of claims 1 to 5, in which the transmissions on at least some of the symbols comprises both inverted and non-inverted pilot signal transmissions on a given symbol.

7. A method of OFDM-MIMO transmission comprising the steps of:

at a transmitter,
receiving a digital data signal to be transmitted;
encoding respective data bits of the data signal together with pilot signals into at least two OFDM many-carrier signals with each carrier conveying a succession of symbols, and with the pilot signal transmissions of all the encoders being located on defined pilot-bearing ones of the carriers, the pilot signals comprising continual pilots and scattered pilots; and
transmitting the at least two many-carrier signals as a corresponding number of radio-frequency transmission signals on the same frequency band; and
at a receiver,
receiving the at least two radio-frequency transmission signals on a transmission channel on the same frequency band, the radio-frequency transmission signals each comprising many carriers each conveying a succession of symbols;
decoding each of the received signals to decode data bits and pilot signal transmissions from the received transmissions, the pilot signal transmissions for all the decoders being located or defined pilot-bearing ones of the carriers, the pilot signals comprising continual pilots and scattered pilots; and
assembling the data outputs of the decoders into a single digital output signal; and
at the transmitter the phases of the scattered pilot signal transmissions are chosen or changed such that some of the corresponding scattered pilot signal transmissions in the at least two many-carrier signals are in the same relatively-non-inverted phase and others of the transmissions are with relatively-inverted phase, the scattered pilot signal transmissions of at least one transmission being inverted for selected pilot-bearing carriers and non-inverted for other pilot-bearing carriers, and wherein continual pilot signal transmissions that occur on a pilot-bearing carrier for which the scattered pilot transmissions are inverted are themselves also inverted; and
at the receiver the pilot signals are extracted by combining scattered pilot signal transmissions having relatively-non-inverted phase with scattered pilot signal transmissions having relatively-inverted phase so as to obtain an indication of the transmission channel characteristics.

**Patentansprüche**

1. OFDM-MIMO-Sender, der Folgendes umfasst:

einen Eingang zum Empfangen eines zu übertragenden digitalen Datensignals;
wenigstens zwei OFDM-Codierer jeweils zum Codieren jeweiliger Datenbits des am Eingang empfangenen Datensignals zusammen mit Pilotsignalen in ein Vielträgersignal, wobei jeder Träger eine Folge von Symbolen transportiert und wobei sich die Pilotsignalübertragungen aller Codierer auf definierten pilotführenden Trägern befinden, wobei die Pilotsignale ständige Pilote und gestreute Pilote umfassen; und
eine entsprechende Anzahl von Funkfrequenzsenderstufen, die mit den Ausgängen der OFDM-Codierer jeweils zum Übertragen der Ausgänge der OFDM-Codierer auf demselben Frequenzband gekoppelt sind;
wobei die Phasen der Gestreute-Pilote-Signalübertragungen so gewählt oder verändert werden, dass einige der entsprechenden Gestreute-Pilote-Signalübertragungen von den wenigstens zwei Senderstufen in derselben relativ nichtinvertierten Phase sind und andere der Übertragungen in der retativ invertierten Phase sind, wobei die Gestreute-Pilote-Signalübertragungen von wenigstens einer Senderstufe für gewählte pilotführende Träger invertiert und für andere pilotführende Träger nicht invertiert sind; und
**dadurch gekennzeichnet, dass** Ständige-Pilote-Signalübertragungen, die auf einem pilotführenden Träger auftreten, für den die Gestreute-Pilote-Ubertragungen invertiert sind, selbst ebenfalls invertiert sind.

0

000

00

**2.** Sender nach Anspruch 1 für den Einsatz in einer 2-mal-2-MIMO-Konfiguration, in der die gestreuten Pilot von einem der OFDM-Codierer auf jedem zweiten gestreute Pilote führenden Träger invertiert sind.

**3.** Sender nach Anspruch 1 für den Einsatz in einer N-mal-N-MIMO-Konfiguration, in der, wenn jeder OFDM-Codierer einen Index i hat und die pilotführenden Träger in N Teilmengen gemäß einem von ihrem Pilotführungsträger-Index modulo N berechneten Index j unterteilt sind, gestreute Pilote je nach dem Element einer N-mal-N-Matrix mit vollem Rang, dessen Reihennummer i und dessen Spaltennummer j ist, invertiert werden oder nicht.

**4.** Sender nach Anspruch 3, wobei die Matrix eine Hadamard-Matrix ist.

**5.** Sender nach einem der Ansprüche 1 bis 4, wobei der Sender ein DVB-T Sender ist.

**6.** Sender nach einem der Ansprüche 1 bis 5, wobei die Übertragungen auf wenigstens einem der Symbole sowohl invertierte als auch nichtinvertierte Pilotsignalübertragungen auf einem gegebenen Symbol sind.

**7.** Verfahren zur OFDM-MIMO-Übertragung, das die folgenden Schritte beinhaltet:

an einem Sender:

Empfangen eines zu übertragenden digitalen Datensignals;
Codieren jeweiliger Datenbits des Datensignals zusammen mit Pilotsignalen zu wenigstens zwei OFDM-Vielträgersignalen, wobei jeder Träger eine Folge von Symbolen transportiert und wobei sich die Pilotsignalübertragungen aller Codierer auf definierten pilotführenden Trägern befinden, wobei die Pilotsignale ständige Pilote und gestreute Pilote umfassen; und
Übertragen der wenigstens zwei Vielträgersignale als eine entsprechende Anzahl von Funkfrequenzübertragungssignalen auf demselben Frequenzband; und
an einem Empfänger:

Empfangen der wenigstens zwei Funkfrequenzübertragungssignale auf einem Übertragungskanal auf demselben Frequenzband, wobei jedes der Funkfrequenzübertragungssignale viele Träger umfasst, die jeweils eine Folge von Symbolen transportieren;
Decodieren jedes der empfangenen Signale, um Datenbits und Pilotsignalübertragungen von den empfangenen Übertragungen zu decodieren, wobei sich die Pilotsignalübertragungen für alle Decodierer auf definierten pilotführenden Trägern befinden, wobei die Pilotsignale ständige Pilote und gestreute Pilote umfassen; und
Zusammensetzen der Datenausgänge der Decodierer zu einem einzelnen digitalen Ausgangssignal; und
wobei am Sender die Phasen der Gestreute-Pilote-Signalübertragungen so gewählt oder verändert werden, dass einige der entsprechenden Gestreute-Pilote-Signalübertragungen in den wenigstens zwei Vielträgersignalen in derselben relativ nichtinvertierten Phase und andere der Übertragungen in der relativ invertierten Phase sind, wobei die Gestreute-Pilote-Signalübertragungen von wenigstens einer Übertragung für gewählte pilotführende Träger invertiert und für andere pilotführende Träger nicht invertiert werden, und wobei Ständige-Pilote-Signalübertragungen, die auf einem pilotführenden Träger auftreten, für den die Gestreute-Pilote-Übertragungen invertiert sind, selbst ebenfalls invertiert sind; und
wobei am Empfänger die Pilotsignale durch Kombinieren von Gestreute-Pilote-Signalübertragungen mit relativ nicht invertierter Phase mit Gestreute-Pilote-Signalübertragungen mit relativ invertierter Phase extrahiert werden, um eine Anzeige der Übertragungskanalcharakteristiken zu erhalten.

**Revendications**

**1.** Emetteur OFDM-MIMO, comprenant :

une entrée pour recevoir un signal de données numériques à transmettre :

au moins deux codeurs OFDM servant chacun à coder des bits de données respectifs du signal de données reçu à l'entrée avec des signaux pilotes en un signal à porteuses multiples, chaque porteuse acheminant une succession de symboles, et les transmissions de signaux pilotes de tous les codeurs étant situées sur des porteuses définies de support de pilotes, les signaux pilotes comprenant des pilotes continus et des pilotes diffusés ; et

un nombre correspondant d'étages émetteurs de fréquences radioélectriques couplés aux sorties des codeurs OFDM servant respectivement à transmettre les sorties des codeurs OFDM sur la même bande de fréquences :

dans lequel les phases des transmissions de signaux pilotes diffusés sont choisies ou changées de telle sorte que certaines des transmissions de signaux pilotes diffusés correspondantes depuis les au moins deux étages émetteurs se trouvent dans la même phase relativement non inversée et que les autres transmissions aient une phase relativement inversée, les transmissions de signaux pilotes diffusés depuis au moins un étage émetteur étant inversées pour des porteuses sélectionnées de support de pilotes et non inversées pour d'autres porteuses de support de pilotes ; et

**caractérisé en ce que**

les transmissions de signaux pilotes continus qui se produisent sur une porteuse de support de pilotes pour lesquelles les transmissions de pilotes diffusés sont inversées sont elles aussi inversées.

2. Emetteur selon la revendication 1, destine à être utilisé dans une configuration MIMO 2 × 2, les pilotes diffusés provenant de l'un des codeurs OFDM étant inversés toutes les une porteuse de support de pilotes diffusés sur deux.

3. Emetteur selon la revendication 1, destiné à être utilisé dans une configuration MIMO N × N, où, si chaque codeur OFDM a un indice 1, et les porteuses de support de pilotes sont divisées en N sous-ensembles en fonction d'un indice j calculé à partir de leur indice de porteuse de support de pilote, modulo N ; les pilotes diffusés sont inversés ou non en fonction de l'élément d'une matrice N × N de plein rang dont le nombre de lignes est i et dont le nombre de colonnes est j.

4. Emetteur selon la revendication 3, dans lequel la matrice est une matrice de Hadamard.

5. Emetteur selon l'une quelconque des revendications 1 à 4, l'émetteur étant un émetteur DVB-T.

6. Emetteur selon l'une quelconque des revendications 1 à 5, dans lequel les transmissions sur au moins certains des symboles comprennent des transmissions de signaux pilotes à la fois inversés et non inversés sur un symbole donné.

7. Procédé de transmission OFOM-MIMO comprenant les étapes suivantes :

au niveau d'un émetteur,

la réception d'un signal de données numériques à émettre ;

le codage de bits de données respectifs du signal de données avec des signaux pilotes en au moins deux signaux à porteuses multiples OFDM, chaque porteuse acheminant une succession de symboles, et les transmissions de signaux pilotes de tous les codeurs étant situées sur des porteuses définies de support de pilotes, les signaux pilotes comprenant des pilotes continus et des pilotes diffusés: et

la transmission des au moins deux signaux à porteuses multiples en tant que nombre correspondant de signaux de transmission de fréquences radioélectriques sur la même bande de fréquences ; et

au niveau d'un récepteur,

la réception des au moins deux signaux de transmission de fréquences radioélectriques sur un canal de transmission sur la même bande de fréquences, les signaux de transmission de fréquences radioélectriques comprenant chacun de nombreuses porteuses acheminant chacune une succession de symboles ;

le décodage de chacun des signaux reçus afin de décoder des bits de données et des transmissions de signaux pilotes à partir des transmissions reçues, les transmissions de signaux pilotes de tous les décodeurs étant situées sur des porteuses sur des porteuses de support de pilotes définies, les signaux pilotes comprenant des pilotes continus et des pilotes diffusés ; et

l'assemblage des sorties de données des décodeurs en un même signal de sortie numérique ; et

au niveau de l'émetteur, les phases des transmissions de signaux pilotes diffusés sont choisies ou changées de telle sorte que certaines des transmissions de signaux pilotes diffusés correspondantes dans les au moins deux signaux à porteuses multiples se trouvent dans la même phase relativement non inversée et que les autres transmissions aient une phase relativement inversée, les transmissions de signaux pilotes diffusés d'au moins une transmission étant inversées pour des porteuses sélectionnées de support de pilotes et non inversées pour d'autres porteuses de support de pilotes ; et dans lequel les transmissions de signaux pilotes continus qui se produisent sur une porteuse de support de pilotes pour laquelle les transmissions de pilotes diffusés sont inversées sont elles aussi inversées , et

au niveau du récepteur, les signaux pilotés sont extraits en combinant les transmissions de signaux pilotes diffusés ayant une phase relativement non inversée avec des transmissions de signaux pilotes diffusés ayant une phase relativement inversée de façon à obtenir une indication des caractéristiques des canaux de transmission.

FIG. 1

time

0
1
2
3
4

Carrier index:   0  1  2  3  4  5  ............

FIG. 2

integrated duel
antenna

transmitter 1                              transmitter 1

FIG. 3

Split double-rate transport stream into
two paths to feed each modulator
(one path shown)

FIG. 4

Using continual pilots

```
Rx 1 input

┌──────────┐   ┌──────────┐   ┌──────────┐   ┌──────────┐   ┌──────────┐   ┌──────────────┐
│    RF    │   │          │   │ Channel  │   │  Time    │   │          │   │  Automatic   │
│  front   │──▶│   ADC    │──▶│  filter  │──▶│  sync    │──▶│   FFT    │──▶│  Frequency   │
│   end    │   │          │   │          │   │          │   │          │   │   Control    │
└──────────┘   └──────────┘   └──────────┘   └──────────┘   └──────────┘   └──────────────┘
    102            104            106            108            110             112
```

100

┌─────────────┐
│     TPS     │──▶ Frame Pulse
│   Decoder   │──▶ Configuration info
└─────────────┘
      124

122

From Rx 2 chain

120

┌──────────────┐        ┌──────────────┐
│ MIMO channel │        │ Generate bit │
│ estimation & │───────▶│   metrics    │
│ equalisation │        │   from CSI   │
└──────────────┘        └──────────────┘
                              126

```
┌──────────────┐   ┌──────────┐   ┌──────────────┐   ┌──────────────┐   ┌──────────┐   ┌──────────────┐
│ Inner Symbol │   │  Viterbi │   │  Transport   │   │    Outer     │   │    RS    │   │              │   TS output
│    & Bit     │──▶│  Decode  │──▶│ Stream Frame │──▶│    Byte      │──▶│  decoder │──▶│ De-scrambler │──▶
│ De-interleave│   │          │   │ synchroniser │   │ De-interleave│   │          │   │              │
└──────────────┘   └──────────┘   └──────────────┘   └──────────────┘   └──────────┘   └──────────────┘
     128              130              132                134              136              138
```

140

FIG. 5

FIG. 6

FIG. 7

FIG. 9

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5345599 A, Paulraj
- EP 1221793 A
- WO 0176110 A
- WO 2007052576 A
- US 200310072254 A
- GB 0603356 A
- EP 07250430 A

**Non-patent literature cited in the description**

- Digital Broadcasting Systems for Television, Sound and Data Services; framing structure, channel coding and modulation for digital terrestrial television. *ETSI Standard ETS 300 744,* 1997
- **G. FISCHINI ; M. GANS.** On Limits of Wireless Communication in a Fading Environment when using Multiple Antennas. *Wireless Personal Communications,* March 1998, vol. 6 (3), 311-335
- **SUGIYAMA et al.** SDM-COFDM Technologies for Broadband Wireless Access over 100 MBIT/s. *NTT Technical Review,* January 2004, vol. 2 (1
- **KIM et al.** Pilot-to-Data Power Ratio for Maximizing the Capacity of MIMO-OFDM. *IEEE Trans. on Communications,* 22 November 2004
- **R. MONNIER ; J.B. RAULT ; T. DE COUASNON.** Digital television broadcasting with high spectral efficiency. *IBC,* 1992, 380-384
- **SCHULZE ; LÜDERS.** Theory and Applications of OFDM and CDMA. John Wiley & Sons, 2005, 181-183